# EUROPEAN PATENT SPECIFICATION

(11) **EP 2 949 563 B1**
(45) Date of publication and mention of the grant of the patent: **01.06.2016**
(21) Application number: 15169158.1
(22) Date of filing: 26.05.2015
(51) Int. Cl.: B62K 11/04, F02M 35/16

(54) **Straddle-type vehicle**
Grätschsitz-Fahrzeug
Véhicule du type monté à califourchon

(30) Priority: 27.05.2014 JP 2014108808
(43) Date of publication of application: 02.12.2015
(73) Proprietor: Yamaha Hatsudoki Kabushiki Kaisha, Iwata-shi, Shizuoka 438-8501 (JP)
(72) Inventor: Kageyama, Kouji, Iwata-shi, Shizuoka 438-8501 (JP)
(74) Representative: Grünecker Patent- und Rechtsanwälte PartG mbB

(56) References cited:
- WO-A1-2013/008815
- TW-A- 200 804 128

## Description

The present invention relates to a straddle-type vehicle according to the preamble of independent claim 1. Such a straddle-type vehicle can be taken from the prior art document TW 200 804 128 A. Moreover, the prior art document WO 2013/008815 A1 discloses a saddle-riding-type motorcycle with a main frame having a downward-hollowed recessed part on a top surface to the rear of a middle part, and a storage box that is provided with a bottom part. The storage box is disposed so that the bottom part thereof extends along a top surface of the recessed part. The frame structure comprises a left seat frame being connected to the main frame and a right seat frame being connected to the main frame the right seat frame being disposed rightward of the left seat frame. A body cover is provided over at least one side of each of the left seat frame and the right seat frame, and includes an upper surface portion being located rearward of the head pipe and frontward of the seat and extending rearward and obliquely downward to a position downward relative to the seat.

Conventionally, what is called an underbone straddle-type vehicle is known. The underbone straddle-type vehicle is equipped with a head pipe, and a body frame having a main frame extending rearward and obliquely downward from the head pipe, and an engine disposed below the body frame. In the underbone straddle-type vehicle, space is formed in front of the seat, and the height of the region between the handlebar and the seat is set low.

JP 2006-088892 A discloses an underbone straddle-type vehicle including a head pipe, left and right subframes extending rearward and obliquely downward, left and right seat rails respectively extending rearward and obliquely upward from the left and right subframes, a seat supported by the left and right seat rails, an engine, and an air cleaner. The engine is supported by a main frame and the left and right subframes. The air cleaner is disposed between the left and right subframes and between the left and right seat rails.

There is a need for an underbone straddle-type vehicle equipped with a larger engine displacement. When the engine displacement is increased, the engine tends to be bigger and heavier. Moreover, the increase in engine displacement tends to result in an increase in the size of the air cleaner, which supplies air to the engine. When the straddle-type vehicle disclosed in JP 2006-088892 A is desired to incorporate a bigger engine, it is necessary that the left and right subframes, which support the engine, should have higher rigidity so that they can withstand the weight of the engine. Moreover, because the load applied to the seat is applied to the left and right subframes via the left and right seat frames, the rigidity of the left and right subframes needs to be high. As a means to increase the rigidity of the left and right subframes, it appears possible to form the left and right subframes to be thicker. However, forming the left and right subframes to be thicker results in a smaller volumetric capacity of the air cleaner, which is disposed between the left and right subframes. Consequently, the air cleaner cannot have a sufficient volumetric capacity. Particularly when the left and right subframes extend inward in a vehicle lateral direction, the distance between the left and right subframes becomes smaller, and the volumetric capacity of the air cleaner becomes smaller.

The present invention has been accomplished in view of the foregoing and other problems. It is an object of the invention to provide a straddle-type vehicle that can ensure sufficient rigidity of the frame that supports the engine and that can increase the volumetric capacity of the air cleaner. According to the present invention said object is solved by a straddle-type vehicle having the features of independent claim 1. Preferred embodiments are laid down in the dependent claims.

Accordingly it is provided a straddle-type vehicle comprising: a head pipe; a main frame connected to the head pipe, extending rearward and obliquely downward from the head pipe, and having a rectangular cross-sectional shape; a left seat frame being connected to the main frame and comprising a left first portion and a left second portion, the left first portion extending rearward and obliquely downward from the main frame, and the left second portion formed integrally with the left first portion and extending rearward and obliquely upward from the left first portion; a right seat frame being connected to the main frame and comprising a right first portion and a right second portion, the right first portion extending rearward and obliquely downward from the main frame, and the right second portion formed integrally with the right first portion and extending rearward and obliquely upward from the right first portion, and the right seat frame being disposed rightward of the left seat frame; a left down frame, being connected to the left first portion of the left seat frame, extending rearward and obliquely downward from the left seat frame, and being thinner than the left seat frame; a right down frame, being connected to the right first portion of the right seat frame, extending rearward and obliquely downward from the right seat frame, being disposed rightward of the left down frame, and being thinner than the right seat frame; a seat supported by the left seat frame and the right seat frame; a body cover being provided over at least one side of each of the left seat frame and the right seat frame, and including an upper surface portion being located rearward of the head pipe and frontward of the seat and extending rearward and obliquely downward to a position downward relative to the seat; an engine disposed below the left down frame and the right down frame and supported by the left down frame and the right down frame; and an air cleaner disposed rearward relative to at least a portion of the engine and disposed between the left seat frame and the right seat frame and between the left down frame and the right down frame, wherein: the left down frame extends inward in a vehicle lateral direction from the left first portion of the left seat frame; a rear end portion of the left down frame is positioned between the left seat frame and the right seat frame as viewed in plan of the vehicle; the right down frame extends inward in a vehicle lateral direction from the right first portion of the right seat frame; and a rear end portion of the right down frame is positioned between the left seat frame and the right seat frame as viewed in plan of the vehicle.

In the straddle-type vehicle according to the present teaching, the left first portion of the left seat frame is connected to the main frame, and the right first portion of the right seat frame is connected to the main frame, so part of the load applied to the seat, which is supported by the left and right seat frames, is transmitted to the main frame. Because the cross-sectional shape of the main frame is a rectangular shape, the main frame has higher rigidity than when the cross-sectional shape is a circular shape. Moreover, because the main frame has a rectangular cross-sectional shape, joining is easier than when its cross-sectional shape is a circular shape. Also, higher bonding strength can be obtained when the main frame is joined to the left seat frame and the right seat frame by welding or the like. Furthermore, because part of the load applied to the seat is transmitted to the main frame, the load applied to the left down frame, which is connected to the left first portion of the left seat frame, and the load applied to the right down frame, which is connected to the right first portion of the right seat frame, are reduced. As a result, the left and right down frames have sufficient rigidity even when the left and right down frames are formed thinner, in contrast to the case where the left and right seat frames are not connected to the main frame. Thus, in the straddle-type vehicle according to the present teaching, the left and right down frames are connected to the main frame, which has high rigidity. Therefore, even when the left and right down frames are thinner than the left and right seat frames, the rigidity of the frame as a whole can be ensured sufficiently. As a result, it becomes possible to provide a straddle-type vehicle equipped with a relatively large engine that is supported by the left and right down frames. In addition, it might appear that the left down frame and the right down frame extending laterally inward can reduce the volumetric capacity of the air cleaner, which is disposed between the left down frame and the right down frame. However, because the left down frame can be formed thinner than the left seat frame and the right down frame can also be formed thinner than the right seat frame, the volumetric capacity of the air cleaner, which is disposed between the left down frame and the right down frame, can be made larger than the case where the left down frame and the right down frame are formed thicker.

In another preferred embodiment of the present teaching, the main frame includes a joint portion joined to the engine, and the left first portion of the left seat frame and the right first portion of the right seat frame are connected to the main frame at respective positions that are frontward relative to the joint portion.

The just-mentioned preferred embodiment can increase the rigidity of the main frame, the left seat frame, and the right seat frame.

In another preferred embodiment of the present teaching, the left down frame is connected to the left first portion of the left seat frame at a position upward relative to the joint portion, and the right down frame is connected to the right first portion of the right seat frame at a position upward relative to the joint portion.

The just-mentioned preferred embodiment can increase the rigidity of the left down frame and the right down frame.

In another preferred embodiment of the present teaching, each of the left seat frame and the right seat frame has a lower end positioned upward relative to the joint portion.

The just-mentioned preferred embodiment makes it possible to support the air cleaner stably, even when a portion of the air cleaner is positioned upward relative to the left seat frame and the right seat frame while the engine is disposed at a low position.

In another preferred embodiment of the present teaching, the straddle-type vehicle may further include: a fuel tank disposed rearward of the air cleaner; a left backstay joining the left down frame and the left second portion of the left seat frame to each other; and a right backstay joining the right down frame and the right second portion of the right seat frame to each other, wherein, as viewed from a side of the vehicle, a left joint portion joining the left backstay and the left second portion of the left seat frame to each other overlaps the fuel tank, and a right joint portion joining the right backstay and the right second portion of the right seat frame to each other overlaps the fuel tank.

With the just-described preferred embodiment, part of the seat load applied to the left seat frame and the right seat frame is transmitted to the main frame. For this reason, the left seat frame and the right seat frame can withstand the load from the seat even when they have relatively low rigidity. As a result, the left joint portion joining the left backstay and the left seat frame to each other and the right joint portion joining the right backstay and the right seat frame to each other need not be positioned rearward relative to the fuel tank in order to increase the rigidity of the left seat frame and the right seat frame. Therefore, the left backstay and the right backstay can be made shorter. In other words, a weight reduction of the left backstay and the right backstay can be achieved. Moreover, it is possible to provide a space behind the left backstay and the right backstay.

In another preferred embodiment of the present teaching, the straddle-type vehicle may further include: a left reinforcing frame being disposed frontward relative to the left backstay and joining the left seat frame and the left down frame to each other; and a right reinforcing frame being disposed frontward relative to the right backstay and rightward of the left reinforcing frame, and joining the right seat frame and the right down frame to each other.

With the just-described preferred embodiment, the left reinforcing frame and the right reinforcing frame respectively join the left seat frame and the left down frame to each other and the right seat frame and the right down frame to each other. This makes it possible to form the left down frame and the right down frame to be thinner while ensuring sufficient rigidity of the left down frame and the right down frame.

In another preferred embodiment of the present teaching, an axial midpoint of the head pipe is positioned upward relative to a vertical midpoint of a portion of the main frame that is connected to the head pipe.

The just-mentioned preferred embodiment enables the head pipe and the main frame to have an appropriate level of rigidity.

In another preferred embodiment of the present teaching, the straddle-type vehicle may further comprise a first reinforcing member connecting the head pipe and an upper surface of the main frame to each other, and a second reinforcing member connecting the head pipe and a lower surface of the main frame to each other.

The just-mentioned preferred embodiment enables the head pipe and the main frame to have higher rigidity.

In another preferred embodiment of the present teaching, the engine may be directly supported by the main frame.

The just-described preferred embodiment can achieve a reduction in the number of members that are necessary in connecting the engine to the main frame. As a result, a reduction in the overall weight of the straddle-type vehicle and simplification of the structure are achieved.

### ADVANTAGEOUS EFFECTS OF INVENTION

The present invention makes it possible to provide a straddle-type vehicle that can ensure sufficient rigidity of a frame that supports an engine and that can increase the volumetric capacity of an air cleaner.

### BRIEF DESCRIPTION OF DRAWINGS

[Fig. 1] Fig. 1 is a left side view illustrating a straddle-type vehicle according to one preferred embodiment.
[Fig. 2] Fig. 2 is a left side view illustrating a body frame and a neighboring region thereof according to one preferred embodiment.
[Fig. 3] Fig. 3 is a plan view illustrating the body frame and the neighboring region thereof according to one preferred embodiment.
[Fig. 4] Fig. 4 is a plan view illustrating the body frame according to one preferred embodiment.
[Fig. 5] Fig. 5 is a left side view illustrating the body frame according to one preferred embodiment.
[Fig. 6] Fig. 6 is a perspective view illustrating the body frame and the neighboring region thereof according to one preferred embodiment.
[Fig. 7] Fig. 7 is a perspective view illustrating the body frame and the neighboring region thereof according to one preferred embodiment.
[Fig. 8] Fig. 8 is a plan view illustrating a lower air cleaner according to one preferred embodiment.
[Fig. 9] Fig. 9 is a cross-sectional view taken along line IX-IX in Fig. 8.
[Fig. 10] Fig. 10 is a cross-sectional view taken along line X-X in Fig. 8.

### DESCRIPTION OF EMBODIMENTS

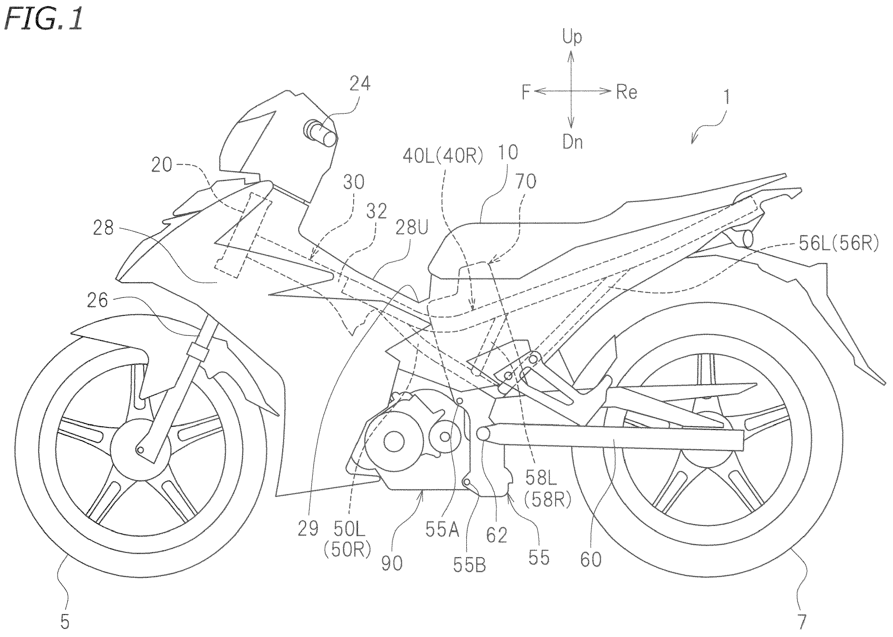

Hereinbelow, preferred embodiments of the present teaching will be described. As illustrated in Fig. 1, the straddle-type vehicle according to the present preferred embodiment is an underbone type motorcycle 1. Note that the straddle-type vehicle means a vehicle such that the rider straddles the vehicle when riding.

In the following description, the terms "front," "rear," "left," "right," "up," and "down" respectively refer to front, rear, left, right, up, and down as defined based on the perspective of the rider seated on the seat 10 of the motorcycle 1, unless specifically indicated otherwise. The terms "above/up" and "below/down" respectively mean the relative vertical positions above/up and below/down as used when the motorcycle 1 is stationary on a horizontal plane. Reference characters F, Re, L, R, Up, and Dn in the drawings indicate front, rear, left, right, up, and down, respectively.

As illustrated in Fig. 1, the motorcycle 1 has a head pipe 20, a body frame 30 connected to the head pipe 20, a seat 10 for the rider to sit on, and an engine 90. A steering shaft (not shown) is supported by the head pipe 20. A handlebar 24 is provided on an upper portion of the steering shaft. A front fork 26 is provided on a lower portion of the steering shaft. A front wheel 5 is supported rotatably at the lower end of the front fork 26.

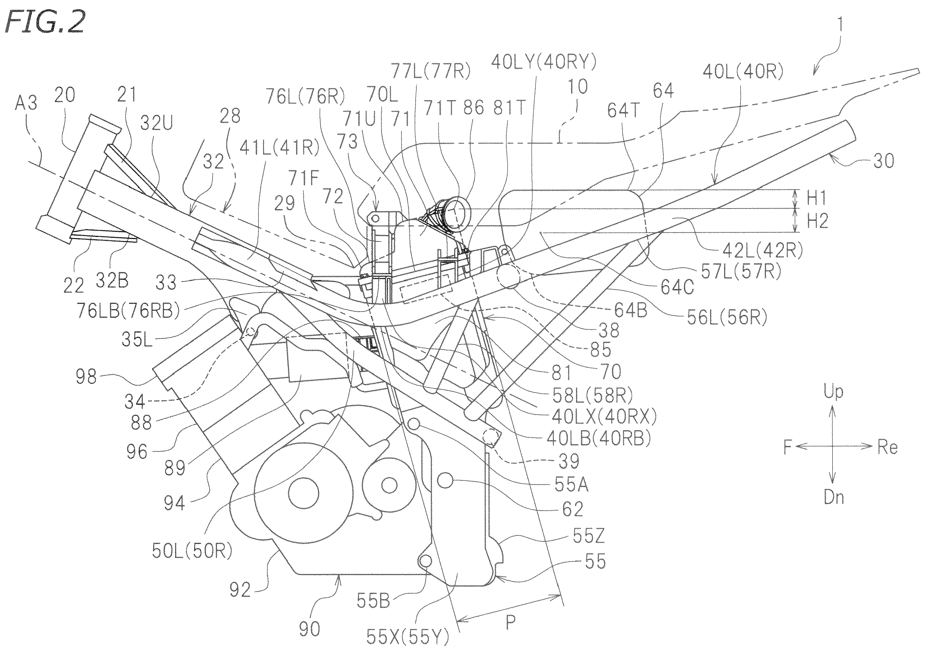

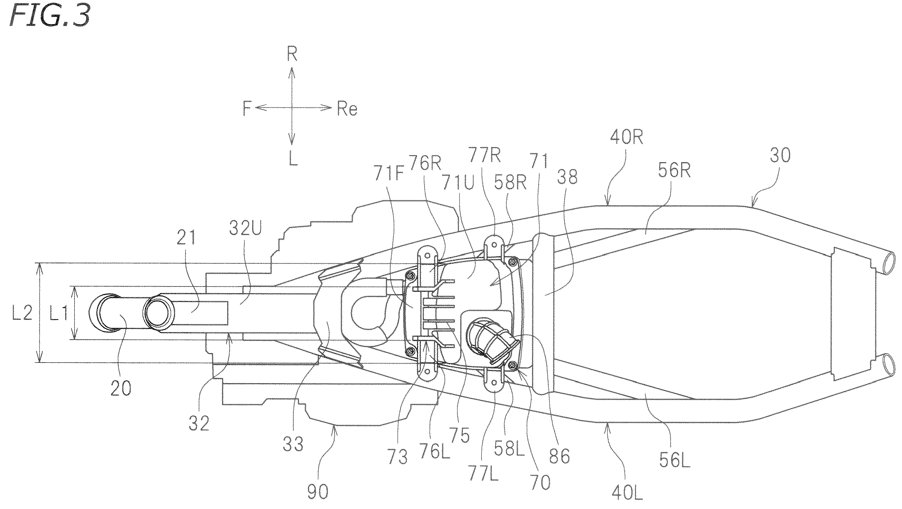

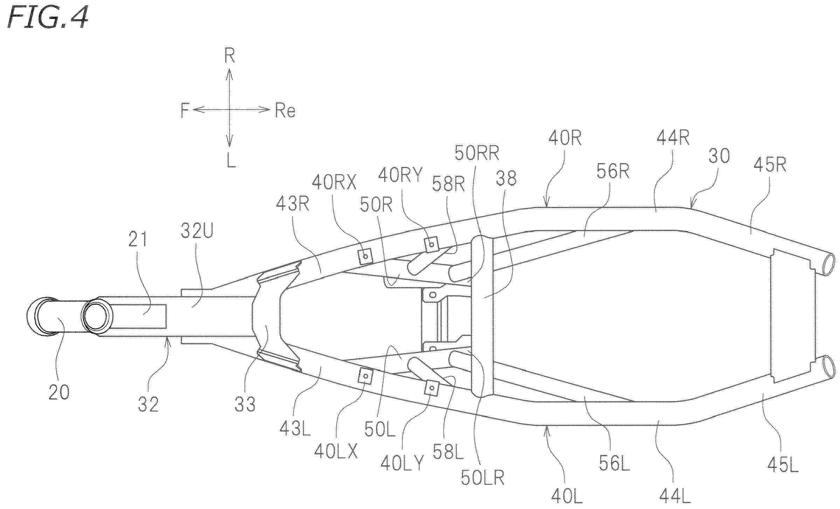

As illustrated in Fig. 2, the body frame 30 has a main frame 32, a left seat frame 40L, a right seat frame 40R (see also Fig. 3), a left down frame 50L, a right down frame 50R (see also Fig. 4), a left backstay 56L, a right backstay 56R (see also Fig. 3), a left reinforcing frame 58L, and a right reinforcing frame 58R (see also Fig. 4).

As illustrated in Fig. 1, the motorcycle 1 has a body cover 28. The body cover 28 is provided over at least one side of each of the left seat frame 40L and the right seat frame 40R. The body cover 28 is provided over the sides of the head pipe 20. The body cover 28 is provided over the sides of the main frame 32. The body cover 28 is provided over the sides of the left seat frame 40L and the right seat frame 40R. The body cover 28 includes an upper surface portion 28U being located rearward of the head pipe 20 and frontward of the seat 10 and extending rearward and obliquely downward to a position downward relative to the seat 10. The vehicle body 28 has a recessed portion 29 recessed downward as viewed from the side of the vehicle. The recessed portion 29 is formed behind the head pipe 20. The recessed portion 29 is formed in front of the seat 10. The recessed portion 29 is formed downward relative to the seat 10. The recessed portion 29 is formed above the engine 90. Because the body cover 28 is provided with the recessed portion 29, a space is formed between the head pipe 20 and the seat 10.

As illustrated in Fig. 2, the engine 90 has a crankcase 92, a cylinder body 94, a cylinder head 96, and a cylinder head cover 98. The cylinder body 94 extends upward from a front portion of the crankcase 92. The cylinder head 96 is disposed above the cylinder body 94 and joined to the cylinder body 94. The cylinder head cover 98 is disposed above the cylinder head 96 and joined to the cylinder head 96. The engine 90 is disposed below the main frame 32. The engine 90 is directly supported by the main frame 32. The engine 90 may be indirectly supported by the main frame 32. The engine 90 is supported by the left down frame 50L and the right down frame 50R. The engine 90 is supported by a later-described engine bracket 55, which is provided on the left down frame 50L and the right down frame 50R (see also Fig. 4). More specifically, the main frame 32 has a first joint portion 34. The first joint portion 34 joins the main frame 32 and the engine 90 to each other. The first joint portion 34 joins the main frame 32 and the cylinder head 96 to each other. The engine bracket 55 includes a second joint portion 55A positioned downward and rearward relative to the first joint portion 34, and a third joint portion 55B positioned downward relative to the second joint portion 55A. The second joint portion 55A and the third joint portion 55B join the engine 55 and the engine bracket 55 to each other. The second joint portion 55A and the third joint portion 55B join the crankcase 92 to the engine bracket 55. The engine 90 may be directly supported by the left down frame 50L and the right down frame 50R.

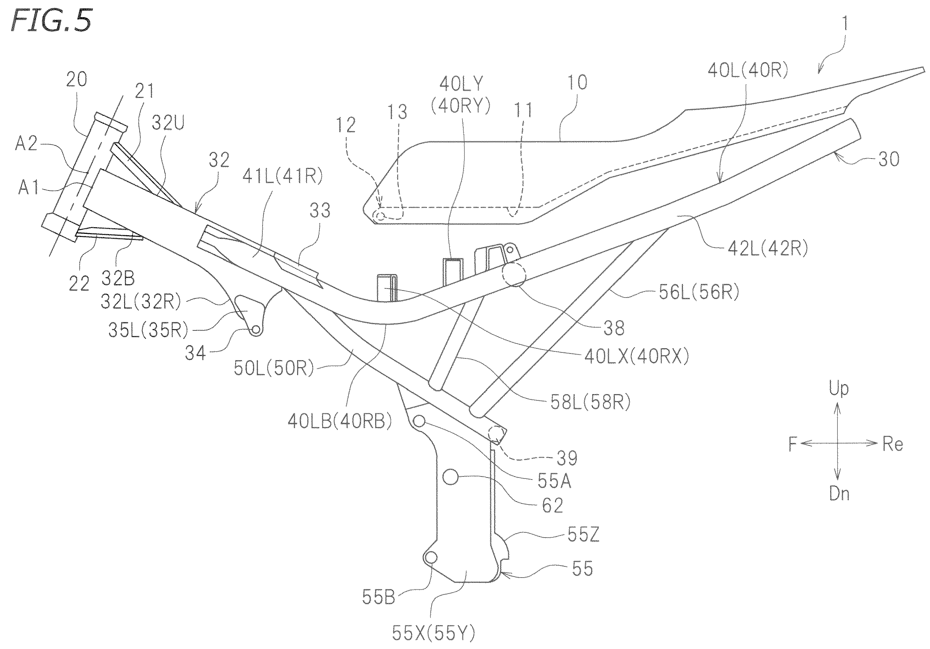

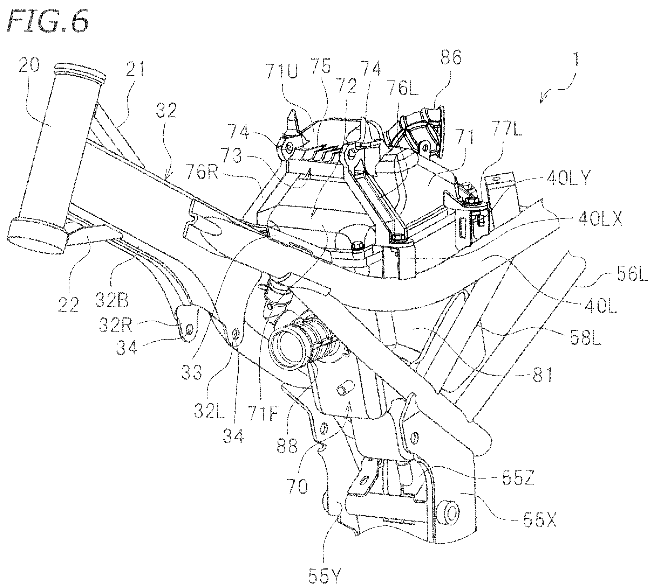

As illustrated in Fig. 5, the main frame 32 is connected to the head pipe 20. The main frame 32 and the head pipe 20 are connected to each other by, for example, welding. The main frame 32 extends rearward and obliquely downward from the head pipe 20. The main frame 32 is formed so that its cross-sectional shape is a rectangular shape. As illustrated in Fig. 6, a rear end portion of the main frame 32 includes a left vertical wall 32L and a right vertical wall 32R. The left vertical wall 32L extends downward. The first joint portion 34 is formed in the left vertical wall 32L. The right vertical wall 32R extends downward. The first joint portion 34 is also formed in the right vertical wall 32R. As illustrated in Fig. 5, a reinforcing member 35L is fitted to the left vertical wall 32L. The reinforcing member 35L is positioned to the left of the left vertical wall 32L. A reinforcing member 35R is fitted to the right vertical wall 32R. The reinforcing member 35R is positioned to the right of the right vertical wall 32R. A vertical midpoint A1 of a portion of the main frame 32 that is connected to the head pipe 20 is positioned downward relative to an axial midpoint A2 of the head pipe 20. As illustrated in Fig. 3, a reinforcing member 33 is fitted to a rear end portion of the main frame 32. The reinforcing member 33 is fitted to a front end portion of the left seat frame 40L and a front end portion of the right seat frame 40R. As illustrated in Fig. 2, the engine 90 is not disposed on the extension line of an axial line A3 of the main frame 32.

As illustrated in Fig. 5, the body frame 30 includes a first reinforcing member 21 and a second reinforcing member 22. The first reinforcing member 21 extends rearward and obliquely downward from the head pipe 20. The first reinforcing member 21 is connected to the head pipe 20 and an upper surface 32U of the main frame 32. The second reinforcing member 22 extends horizontally from the head pipe 20. The second reinforcing member 22 is connected to the head pipe 20 and a lower surface 32B of the main frame 32. The second reinforcing member 22 may extend rearward and obliquely upward from the head pipe 20.

As illustrated in Fig. 5, the left seat frame 40L is connected to the main frame 32. The left seat frame 40L and the main frame 32 are connected to each other by welding. The left seat frame 40L and the main frame 32 may be connected to each other by a bolt or the like. The left seat frame 40L is formed in a pipe shape. The left seat frame 40L is formed so that its cross-sectional shape is circular. The left seat frame 40L includes a left first portion 41L and a left second portion 42L. The left first portion 41 L and the left second portion 42L are integrally formed with each other. The left first portion 41 L extends rearward and obliquely downward from the main frame 32. The inclination angle of the left first portion 41 L from the horizontal line is substantially the same as the inclination angle of the main frame 32 from the horizontal line. The left second portion 42L extends rearward and obliquely upward from the left first portion 41 L. The left first portion 41 L of the left seat frame 40L is connected to the main frame 32 at a position that is frontward relative to the first joint portion 34. A lower end 40LB of the left seat frame 40L is positioned upward relative to the first joint portion 34.

As illustrated in Fig. 4, the left seat frame 40L includes a left third portion 43L, a left fourth portion 44L, and a left fifth portion 45L. The left third portion 43L, the left fourth portion 44L, and the left fifth portion 45L are integrally formed with each other. The left third portion 43L extends rearward and obliquely leftward from the main frame 32. The left fourth portion 44L extends rearward from the left third portion 43L. The left fifth portion 45L extends rearward and obliquely rightward from the left fourth portion 44L

As illustrated in Fig. 5, the right seat frame 40R is connected to the main frame 32. The right seat frame 40R and the main frame 32 are connected to each other by welding. The right seat frame 40R and the main frame 32 may be connected to each other by a bolt or the like. The right seat frame 40R is formed in a pipe shape. The right seat frame 40R is formed so that its cross-sectional shape is circular. The right seat frame 40R is disposed rightward of the left seat frame 40L. The right seat frame 40R includes a right first portion 41 R and a right second portion 42R. The right first portion 41 R and the right second portion 42R are integrally formed with each other. The right first portion 41 R extends rearward and obliquely downward from the main frame 32. The inclination angle of the right first portion 41 R from the horizontal line is substantially the same as the inclination angle of the main frame 32 from the horizontal line. The right second portion 42R extends rearward and obliquely upward from the right first portion 41 R. The right first portion 41 R of the right seat frame 40R is connected to the main frame 32 at a position that is frontward relative to the first joint portion 34. A lower end 40RB of the right seat frame 40R is positioned upward relative to the first joint portion 34.

As illustrated in Fig. 4, the right seat frame 40R includes a right third portion 43R, a right fourth portion 44R, and a right fifth portion 45R. The right third portion 43R, the right fourth portion 44R, and the right fifth portion 45R are integrally formed with each other. The right third portion 43R extends rearward and obliquely rightward from the main frame 32. The right fourth portion 44R extends rearward from the right third portion 43R. The right fifth portion 45R extends rearward and obliquely leftward from the right fourth portion 44R.

As illustrated in Fig. 3, the body frame 30 includes a first cross member 38. The first cross member 38 extends laterally, i.e., in a left-to-right/right-to-left direction. The first cross member 38 is connected to the left seat frame 40L and the right seat frame 40R. The first cross member 38 is connected to the left third portion 43L of the left seat frame 40L and the right third portion 43R of the right seat frame 40R. As illustrated in Fig. 5, the first cross member 38 is also connected to the left second portion 42L of the left seat frame 40L and the right second portion 42R of the right seat frame 40R.

As illustrated in Fig. 5, the left down frame 50L is connected to the left first portion 41 L of the left seat frame 40L. The left down frame 50L and the left seat frame 40L are connected to each other by, for example, welding. The left down frame 50L is connected to the left first portion 41 L of the left seat frame 40L at a position upward relative to the first joint portion 34. The left down frame 50L is formed in a pipe shape. The left down frame 50L is formed so that its cross-sectional shape is circular. The left down frame 50L is thinner than the left seat frame 40L. The diameter of the left down frame 50L is smaller than the diameter of the left seat frame 40L. The left down frame 50L extends rearward and obliquely downward from the left seat frame 40L. As illustrated in Fig. 4, the left down frame 50L extends inward in a vehicle lateral direction from the left first portion 41 L (see Fig. 5) of the left seat frame 40L. The left down frame 50L extends rearward and obliquely rightward from the left first portion 41 L of the left seat frame 40L. As viewed in plan of the vehicle, a rear end portion 50LR of the left down frame 50L is positioned between the left seat frame 40L and the right seat frame 40R. The left down frame 50L may extend rearward, or rearward and obliquely leftward, from the left seat frame 40L.

As illustrated in Fig. 5, the right down frame 50R is connected to the right first portion 41 R of the right seat frame 40R. The right down frame 50R and the right seat frame 40R are connected to each other by, for example, welding, The right down frame 50R is connected to the right first portion 41 R of the right seat frame 40R at a position upward relative to the first joint portion 34. The right down frame 50R is formed in a pipe shape. The right down frame 50R is formed so that its cross-sectional shape is circular. The right down frame 50R is thinner than the right seat frame 40R. The diameter of the right down frame 50R is smaller than the diameter of the right seat frame 40R. The right down frame 50R extends rearward and obliquely downward from the right seat frame 40R. As illustrated in Fig. 4, the right down frame 50R is positioned to the right of the left down frame 50L. The right down frame 50R extends inward in a vehicle lateral direction from the right first portion 41 R (see Fig. 5) of the right seat frame 40R. The right down frame 50R extends rearward and obliquely leftward from the right first portion 41 R of the right seat frame 40R. As viewed in plan of the vehicle, a rear end portion 50RR of the right down frame 50R is positioned between the left seat frame 40L and the right seat frame 40R. The right down frame 50R may extend rearward, or rearward and obliquely rightward, from the right seat frame 40R.

As illustrated in Fig. 5, the body frame 30 includes a second cross member 39. The second cross member 39 extends laterally, i.e., in a left-to-right/right-to-left direction. The second cross member 39 is connected to the left down frame 50L and the right down frame 50R. The second cross member 39 is positioned below the first cross member 38. The second cross member 39 is thinner than the first cross member 38.

As illustrated in Fig. 5, the body frame 30 has the engine bracket 55. The engine bracket 55 is provided on the left down frame 50L and the right down frame 50R. The engine bracket 55 supports a rear end portion of the engine 90 (see Fig. 2). The engine bracket 55 includes a left plate member 55X, a right plate member 55Y (see also Fig. 6), and a rear plate member 55Z. The left plate member 55X is connected to the left down frame 50L. The left plate member 55X extends downward from the left down frame 50L. The right plate member 55Y is connected to the right down frame 50R. The right plate member 55Y extends downward from the right down frame 50R. The right plate member 55Y is positioned to the right of the left plate member 55X. The rear plate member 55Z joins the rear end of the left plate member 55X and the rear end of the right plate member 55Y. The rear plate member 55Z extends in a vertical direction. Each of the left plate member 55X and the right plate member 55Y has a second joint portion 55A and a third joint portion 55B.

As illustrated in Fig. 1, the motorcycle 1 has a rear arm 60 joined to the engine bracket 55. The engine bracket 55 and the rear arm 60 are joined to each other via a pivot shaft 62. The rear arm 60 is joined swingably to the engine bracket 55. The rear arm 60 may be joined swingably to the body frame 30 or to the engine 90. A rear wheel 7 is supported rotatably at the rear end of the rear arm 60.

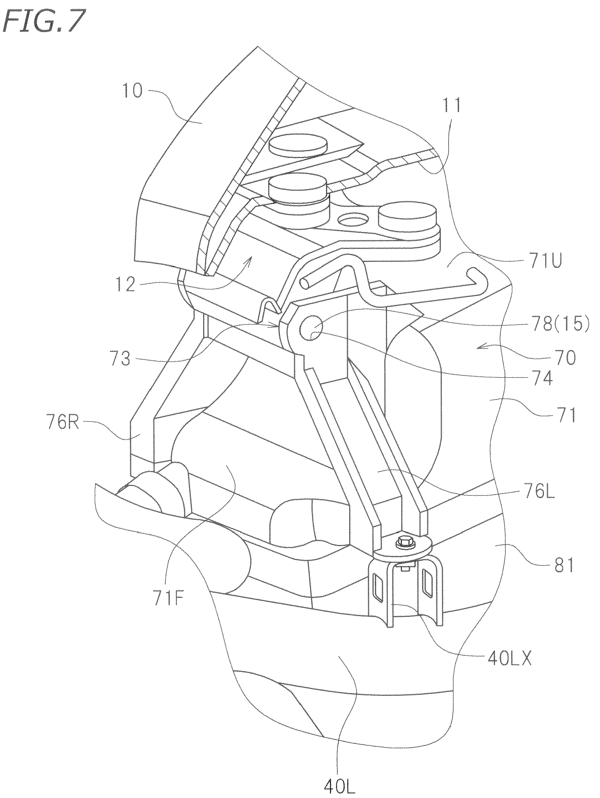

The seat 10 is positioned above the left seat frame 40L and the right seat frame 40R. The seat 10 is supported by the left seat frame 40L and the right seat frame 40R. As illustrated in Fig. 7, the seat 10 has a bracket 12. The bracket 12 is disposed on a back surface 11 of the seat 10. The bracket 12 engages with a later-described seat support portion 73. As illustrated in Fig. 5, the bracket 12 has a through-hole 13 that penetrates through the bracket 12 in a lateral direction. As illustrated in Fig. 7, the bracket 12 of the seat 10 is joined to the seat support portion 73 by a shaft 78. The shaft 78 passes through the through-hole 13 (see Fig. 5) of the bracket 12 of the seat 10 and through a through-hole 74 of the seat support portion 73. The shaft 78, the bracket 12, and the seat support portion 73 together form a hinge mechanism 15. The seat 10 is pivotable about the shaft 78. The hinge mechanism 15 allows the seat 10 to open and close. The seat 10 is pivotable about its front end portion. The bracket 12 may be formed integrally with the seat 10.

As illustrated in Fig. 2, the motorcycle 1 has an air cleaner 70. The air cleaner 70 is disposed below the seat 10. The air cleaner 70 is disposed rearward of the main frame 32. As illustrated in Fig. 3, the air cleaner 70 is disposed between the left seat frame 40L and the right seat frame 40R. As illustrated in Fig. 2, the air cleaner 70 is disposed between the left down frame 50L and the right down frame 50R. The air cleaner 70 is disposed between the left reinforcing frame 58L and the right reinforcing frame 58R. The air cleaner 70 is disposed rearward relative to at least a portion of the engine 90. The air cleaner 70 is disposed rearward relative to the cylinder body 94.

As illustrated in Fig. 2, the air cleaner 70 includes an upper air cleaner case 71, a lower air cleaner case 81, and an element 85. The element 85 cleans the air. The element 85 is disposed in the lower air cleaner case 81. The element 85 may be disposed in the upper air cleaner case 71. The element 85 may be either a dry-type element, that is, an element not impregnated with oil, or a wet-type element, that is, an element impregnated with oil.

The upper air cleaner case 71 is formed of a material that is harder and more rigid than the material that forms the lower air cleaner case 81. As illustrated in Fig. 3, the upper air cleaner case 71 is disposed between the left seat frame 40L and the right seat frame 40R, as viewed in plan of the vehicle. As illustrated in Fig. 2, the lower air cleaner case 81 is disposed below the upper air cleaner case 71. The lower air cleaner case 81 is joined to the upper air cleaner case 71. The lower air cleaner case 81 is disposed between the left seat frame 40L and the right seat frame 40R. The lower air cleaner case 81 is disposed between the left down frame 50L and the right down frame 50R. The lower air cleaner case 81 is disposed between the left reinforcing frame 58L and the right reinforcing frame 58R. A joined position 70L between the upper air cleaner case 71 and the lower air cleaner case 81 is positioned upward relative to a first portion P of each of the left seat frame 40L and the right seat frame 40R. The first portion P of the left seat frame 40L is a portion of the left seat frame 40L in which the left seat frame 40L overlaps with the air cleaner 70 as viewed from a side of the vehicle. The first portion P of the right seat frame 40R is a portion of the right seat frame 40R in which the right seat frame 40R overlaps with the air cleaner 70 as viewed from a side of the vehicle. The joined position 70L is positioned upward relative to the cylinder head cover 98. The joined position 70L is positioned upward relative to the first joint portion 34.

A front end portion 71 F of an upper surface 71 U of the upper air cleaner case 71 is recessed downward. The front end portion 71 F of the upper surface 71 U of the upper air cleaner case 71 is disposed rearward of the recessed portion 29 of the body cover 28. The upper air cleaner case 71 has a recessed portion 72, which is recessed across its entire lateral width. The recessed portion 72 is disposed rearward of the recessed portion 29 of the body cover 28.

As illustrated in Fig. 2, the motorcycle 1 has a seat support portion 73. The seat support portion 73 is formed of a material that is harder and more rigid than the material that forms the lower air cleaner case 81. It is preferable that the material that forms the seat support portion 73 and the material that forms the lower air cleaner case 71 be the same. The seat support portion 73 supports the seat 10 so as to be openable and closable. The seat support portion 73 is formed integrally with the upper air cleaner case 71. As illustrated in Fig. 3, the seat support portion 73 extends laterally, i.e., in a left-to-right/right-to-left direction. The lateral width L1 of the seat support portion 73 is smaller than the lateral width L2 of the front end portion 71 F of the upper surface 71 U of the upper air cleaner case 71. A plurality of ribs 75 extending in a vehicle longitudinal direction are formed on the seat support portion 73. The ribs 75 are formed over the seat support portion 73 and the upper air cleaner case 71. As illustrated in Fig. 6, the seat support portion 73 is disposed so as to be spaced from the front end portion 71 F of the upper surface 71 U of the upper air cleaner case 71. As illustrated in Fig. 3, the seat support portion 73 overlaps with the front end portion 71 F of the upper surface 71U of the upper air cleaner case 71 as viewed in plan of the vehicle. As illustrated in Fig. 6, the seat support portion 73 has through-holes 71 each penetrating through the seat support portion 73 in a lateral direction.

As illustrated in Fig. 6, the motorcycle 1 has a left seat load bearing portion 76L and a right seat load bearing portion 76R. The left seat load bearing portion 76L extends downward from the left end of the seat support portion 73. The left seat load bearing portion 76L inclines from the left end of the seat support portion 73 toward the left seat frame 40L. As illustrated in Fig. 3, the left seat load bearing portion 76L extends leftward from the left end of the seat support portion 73. The left seat load bearing portion 76L is supported by the left seat frame 40L. The left seat load bearing portion 76L is supported by a left first support portion 40LX (see Fig. 4) provided on the left seat frame 40L. As illustrated in Fig. 2, the left first support portion 40LX is positioned below the seat support portion 73 as viewed from a side of the vehicle. The left first support portion 40LX is disposed on the above-mentioned first portion P. The body cover 28 (see Fig. 1) is provided over a side of the left seat load bearing portion 76L. The body cover 28 is provided leftward of the left seat load bearing portion 76L. The left seat load bearing portion 76L may be supported either directly or indirectly by the left seat frame 40L.

As illustrated in Fig. 3, the right seat load bearing portion 76R is disposed rightward of the left seat load bearing portion 76L. The right seat load bearing portion 76R extends downward from the right end of the seat support portion 73. The right seat load bearing portion 76R inclines from the right end of the seat support portion 73 toward the right seat frame 40R. The right seat load bearing portion 76R extends rightward from the right end of the seat support portion 73. The right seat load bearing portion 76R is supported by the right seat frame 40R. The right seat load bearing portion 76R is supported by a right first support portion 40RX (see Fig. 4) provided on the right seat frame 40R. As illustrated in Fig. 2, the right first support portion 40RX is positioned below the seat support portion 73 as viewed from a side of the vehicle. The right first support portion 40RX is disposed on the above-mentioned first portion P. The body cover 28 (see Fig. 1) is provided over a side of the right seat load bearing portion 76R. The body cover 28 is provided rightward of the right seat load bearing portion 76R. The right seat load bearing portion 76R may be supported either directly or indirectly by the right seat frame 40R.

As illustrated in Fig. 3, the upper air cleaner case 71 has a left securing portion 77L and a right securing portion 77R. The left securing portion 77L is disposed rearward of the left seat load bearing portion 76L. The left securing portion 77L is supported by the left seat frame 40L. The left securing portion 77L is supported by a left second support portion 40LY (see Fig. 4) provided on the left seat frame 40L. As illustrated in Fig. 2, the left second support portion 40LY is disposed on the above-mentioned first portion P. As illustrated in Fig. 3, the right securing portion 77R is disposed rearward of the right seat load bearing portion 76R. The right securing portion 77R is supported by the right seat frame 40R. The right securing portion 77R is supported by a right second support portion 40RY (see Fig. 4) provided on the right seat frame 40R. As illustrated in Fig. 2, the right second support portion 40RY is disposed on the above-mentioned first portion P. The left securing portion 77L is disposed upward relative to the lower end 76LB of the left seat load bearing portion 76L. The right securing portion 77R is disposed upward relative to the lower end 76RB of the right seat load bearing portion 76R.

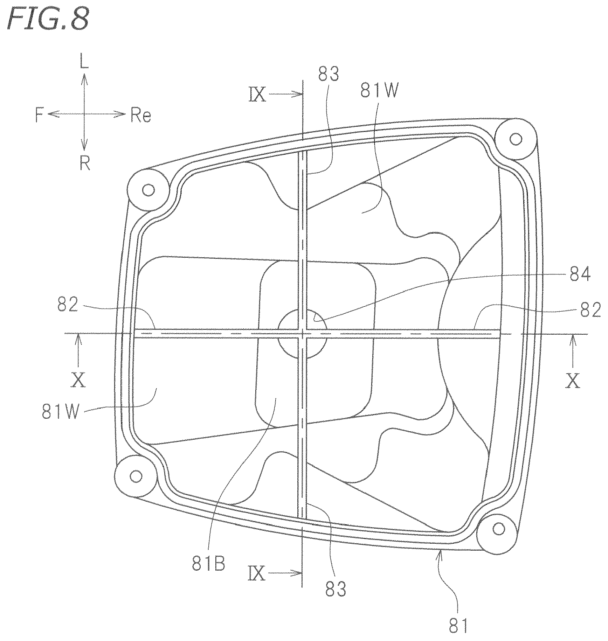

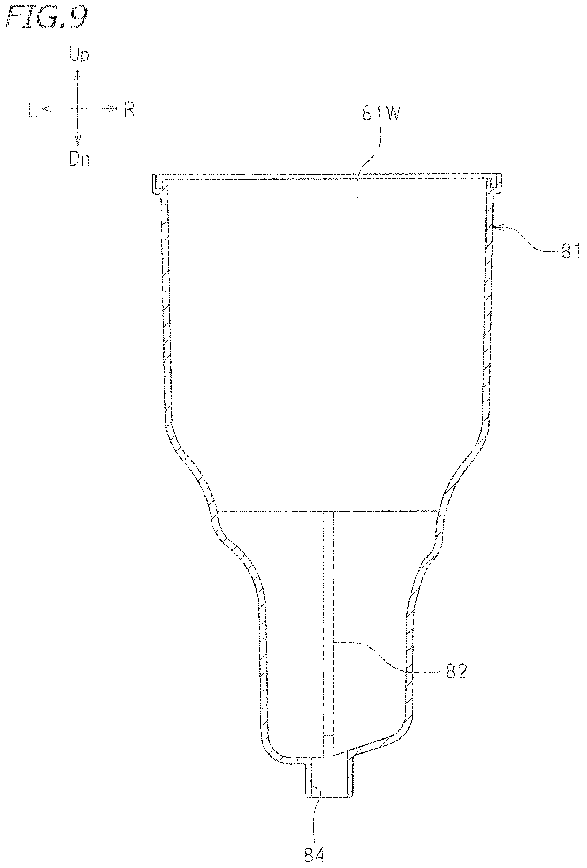

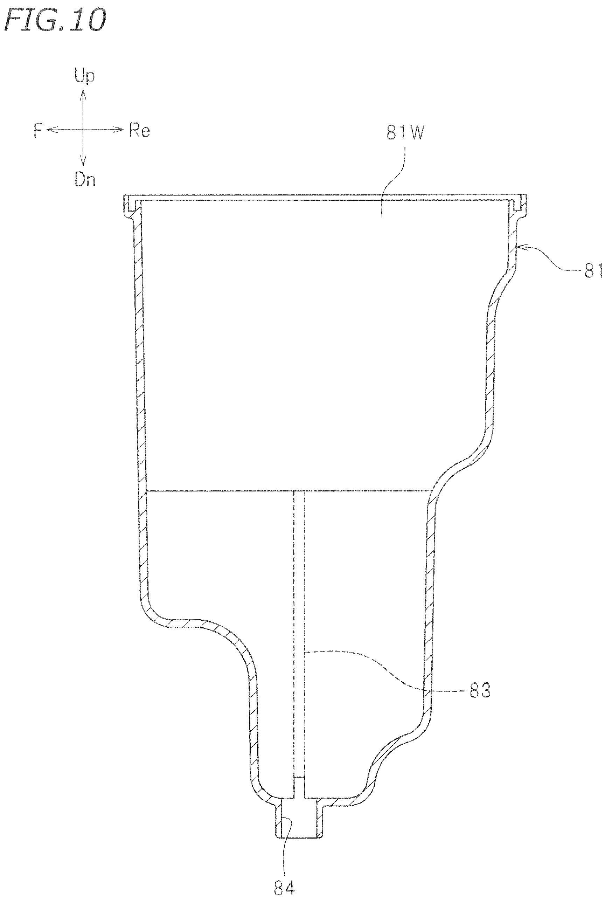

Fig. 8 is a plan view of the lower air cleaner case 81. As illustrated in Fig. 8, the lower air cleaner case 81 has a drain hole 84. The drain hole 84 is formed in a bottom wall 81 B of the lower air cleaner case 81. The water that has accumulated in the air cleaner 70 is discharged out of the lower air cleaner case 81 through the drain hole 84. The lower air cleaner case 81 has a first rib 82 and a second rib 83. The first rib 82 is formed on an inner wall 81W of the lower air cleaner case 81. As illustrated in Fig. 9, the first rib 82 extends in a vehicle longitudinal direction and in a vertical direction. As illustrated in Fig. 10, the second rib 83 is formed on the inner wall 81W of the lower air cleaner case 81. The second rib 83 extends in a vehicle lateral direction and in a vertical direction.

As illustrated in Fig. 2, the air cleaner 70 is provided with a first intake pipe 86. The first intake pipe 86 is provided on the upper air cleaner case 71. The first intake pipe 86 extends upward. The first intake pipe 86 has an opening facing rearward and obliquely leftward. The air cleaner 70 is provided with a second intake pipe 88. The second intake pipe 88 guides the air within the air cleaner 70 toward the engine 90. The second intake pipe 88 is provided on the lower air cleaner case 81. The second intake pipe 88 extends in a vehicle longitudinal direction. The second intake pipe 88 is connected to the cylinder head 96 via a throttle body 89.

As illustrated in Fig. 2, the motorcycle 1 has a fuel tank 64. The fuel tank 64 is disposed rearward of the air cleaner 70. The fuel tank 64 is disposed below the seat 10. The top end 71T of the upper air cleaner case 71 is positioned upward relative to the vertically central position 64C of the fuel tank 64. The height difference H1 between the top end 71T of the upper air cleaner case 71 and the top end 64T of the fuel tank 64 is smaller than the height difference H2 between the top end 71T of the upper air cleaner case 71 and the vertically central position 64C of the fuel tank 64. The bottom end 64B of the fuel tank 64 is positioned downward relative to the top end 81T of the lower air cleaner case 81.

As illustrated in Fig. 2, the left backstay 56L extends rearward and obliquely upward from the left down frame 50L. As illustrated in Fig. 4, the left backstay 56L extends rearward and obliquely leftward from the left down frame 50L. As illustrated in Fig. 2, the left backstay 56L joins the left down frame 50L and the left second portion 42L of the left seat frame 40L to each other. As viewed from a side of the vehicle, a left joint portion 57L joining the left backstay 56L and the left second portion 42L of the left seat frame 40L to each other overlaps with the fuel tank 64.

As illustrated in Fig. 2, the right backstay 56R extends rearward and obliquely upward from the right down frame 50R. As illustrated in Fig. 4, the right backstay 56R extends rearward and obliquely rightward from the right down frame 50R. The right backstay 56R is positioned rightward of the left backstay 56L. As illustrated in Fig. 2, the right backstay 56R joins the right down frame 50R and the right second portion 42R of the right seat frame 40R to each other. As viewed from a side of the vehicle, a right joint portion 57R joining the right backstay 56R and the right second portion 42R of the right seat frame 40R to each other overlaps with the fuel tank 64.

As illustrated in Fig. 2, the left reinforcing frame 58L is disposed frontward relative to the left backstay 56L. The left reinforcing frame 58L joins the left down frame 50L and the left second portion 42L of the left seat frame 40L to each other. The left reinforcing frame 58L extends rearward and obliquely upward from the left down frame 50L. As illustrated in Fig. 4, the left reinforcing frame 58L extends rearward and obliquely leftward from the left down frame 50L. The left reinforcing frame 58L may join the left down frame 50L and the left first portion 41 L (see Fig. 2) of the left seat frame 40L to each other.

As illustrated in Fig. 4, the right reinforcing frame 58R is positioned rightward of the left reinforcing frame 58L. As illustrated in Fig. 2, the right reinforcing frame 58R is disposed frontward relative to the right backstay 56R. The right reinforcing frame 58R joins the right down frame 50R and the right second portion 42R of the right seat frame 40R to each other. The right reinforcing frame 58R extends rearward and obliquely upward from the right down frame 50R. As illustrated in Fig. 4, the right reinforcing frame 58R extends rearward and obliquely rightward from the right down frame 50R. The right reinforcing frame 58R may join the right down frame 50R and the right first portion 41 R (see Fig. 2) of the right seat frame 40R to each other.

As thus far described, in the motorcycle 1, the left first portion 41 L of the left seat frame 40L is connected to the main frame 32, and the right first portion 41 R of the right seat frame 40R is connected to the main frame 32, as illustrated in Fig. 2. Therefore, part of the load applied to the seat 10, which is supported by the left and right seat frames 40L and 40R, is transmitted to the main frame 32. Because the cross-sectional shape of the main frame 32 is a rectangular shape, the main frame 32 has higher rigidity than when its cross-sectional shape is a circular shape. Moreover, because the main frame 32 has a rectangular cross-sectional shape, it is easier to join the main frame 32 to the left and right seat frames 40L and 40R than when its cross-sectional shape is a circular shape. Also, higher bonding strength is obtained when the main frame 32 is joined to the left seat frame 40L and the right seat frame 40R by welding or the like. Furthermore, because part of the load applied to the seat 10 is transmitted to the main frame 32, the load applied to the left down frame 50L, which is connected to the left first portion 41 L of the left seat frame 40L, and the load applied to the right down frame 50R, which is connected to the right first portion 41 R of the right seat frame 40, are reduced. As a result, the left and right down frames 50L and 50R have sufficient rigidity even when the left and right down frames 50L and 50R are formed thinner, in contrast to the case where the left and right seat frames 40L and 40R are not connected to the main frame 32. As described above, in the motorcycle 1, the left seat frame 40L and the right seat frame 40R are connected to the main frame 32 with high rigidity. For this reason, even when the left and right down frames 50L and 50R, which are connected respectively to the left and right first portions 41 L and 41 R of the left and right seat frames 40L and 40R, are thinner than the left and right seat frames 40L and 40R, the rigidity of the body frame 30 as a whole can be ensured sufficiently. As a result, it becomes possible to provide the motorcycle 1 in which the engine 90 of a relatively large size is supported by the left and right down frames 50R and 50L. In addition, it may appear that the left down frame 50L and the right down frame 50R extending laterally inward can reduce the volumetric capacity of the air cleaner 70, which is disposed between the left down frame 50L and the right down frame 50R. However, because the left down frame 50L can be formed thinner than the left seat frame 40L and the right down frame 50R can also be formed thinner than the right seat frame 40R, the volumetric capacity of the air cleaner 70, which is disposed between the left down frame 50L and the right down frame 50R, can be made larger than the case where the left down frame 50L and the right down frame 50R are formed thicker.

In the motorcycle 1 according to the present preferred embodiment, the left first portion 41L of the left seat frame 40L and the right first portion 41 R of the right seat frame 40R are connected to the main frame 32 at respective positions frontward relative to the first joint portion 34, as illustrated in Fig. 2. This makes it possible to increase the rigidity of the main frame 32, the left seat frame 40L, and the right seat frame 40R.

In the motorcycle 1 according to the present preferred embodiment, the left down frame 50L is connected to the left first portion 41 L at a position upward relative to the first joint portion 34, and the right down frame 50R is connected to the right first portion 41 R of the right seat frame 40R at a position upward relative to the first joint portion 34, as illustrated in Fig. 2. This makes it possible to increase the rigidity of the left down frame 50L and the right down frame 50R.

in the motorcycle 1 according to the present preferred embodiment, the lower end 40LB of the left seat frame 40L and the lower end 40RB of the right seat frame 40R are positioned upward relative to the first joint portion 34, as illustrated in Fig. 2. This makes it possible to support the air cleaner 70 stably, even when a portion of the air cleaner 70 is positioned upward relative to the left seat frame 40L and the right seat frame 40R while the engine 90 is disposed at a low position.

In the motorcycle 1 according to the present preferred embodiment, as viewed from a side of the vehicle, the left joint portion 57L joining the left backstay 56L and the left second portion 42L of the left seat frame 40L to each other overlaps the fuel tank 64, and the right joint portion 57R joining the right backstay 56R and the right second portion 42R of the right seat frame 40R to each other overlaps the fuel tank 64, as illustrated in Fig. 2. Part of the seat load applied to the left seat frame 40L and the right seat frame 40R is transmitted to the main frame 32. For this reason, the left seat frame 40L and the right seat frame 40R can withstand the load from the seat 10 even when they have relatively low rigidity. As a result, the left joint portion 57L and the right joint portion 57R need not be positioned rearward relative to the fuel tank 64 in order to increase the rigidity of the left seat frame 40L and the right seat frame 40R. Therefore, the left backstay 56L and the right backstay 56R can be made shorter. In other words, a weight reduction of the left backstay 56L and the right backstay 56R can be achieved. Moreover, it is possible to provide a space behind the left backstay 56L and the right backstay 56R.

In the motorcycle 1 according to the present preferred embodiment, the left reinforcing frame 58L and the right reinforcing frame 58R respectively join the left seat frame 40L and the left down frame 50L to each other and the right seat frame 40R and the right down frame 50R to each other, as illustrated in Fig. 2. This makes it possible to form the left down frame 50L and the right down frame 50R to be thinner while ensuring sufficient rigidity of the left down frame 50L and the right down frame 50R.

In the motorcycle 1 according to the present preferred embodiment, the axial midpoint A2 of the head pipe 20 is positioned upward relative to the vertical midpoint A1 of the portion of the main frame 32 that is connected to the head pipe 20, as illustrated in Fig. 5. This enables the head pipe 20 and the main frame 32 to have an appropriate level of rigidity.

The motorcycle 1 according to the present preferred embodiment has the first reinforcing member 21 connecting the head pipe 20 and the upper surface 32U of the main frame 32 to each other and the second reinforcing member 22 connecting the head pipe 20 and the lower surface 32B of the main frame 32 to each other. This enables the head pipe 20 and the main frame 32 to have higher rigidity.

In the motorcycle 1 according to the present preferred embodiment, the engine 90 is directly supported by the main frame 32, as illustrated in Fig. 2. This achieves a reduction in the number of members that are necessary in connecting the engine 90 to the main frame 32. As a result, a reduction in the overall weight of the motorcycle 1 and simplification of the structure are achieved.

### REFERENCE SIGNS LIST

32 -- Main frame
34 -- First joint portion
40L -- Left seat frame
40R -- Right seat frame
41L -- Left first portion
41R -- Right first portion
42L -- Left second portion
42R -- Right second portion
50L -- Left down frame
50R -- Right down frame
70 -- Air cleaner
90 - Engine

## Claims

1. A straddle-type vehicle (1) comprising:
a head pipe (20);
a main frame (32) being connected to the head pipe (20), extending rearward and obliquely downward from the head pipe (20);
a left seat frame (40L) being connected to the main frame (32) and comprising a left first portion (41 L) and a left second portion (42L), the left first portion (41 L) extending rearward and obliquely downward from the main frame (32), and the left second portion (42L) formed integrally with the left first portion (41 L) and extending rearward and
obliquely upward from the left first portion (41 L);
a right seat frame (40R) being connected to the main frame (32) and comprising a right first portion (41 R) and a right second portion (42R), the right first portion (41 R) extending rearward and obliquely downward from the main frame (32), and the right second portion (42R) formed integrally with the right first portion (41 R) and extending rearward and obliquely upward from the right first portion (41 R), the right seat frame (40R) being disposed rightward of the left seat frame (40L);
a left down frame (50L), being connected to the left first portion (41 L) of the left seat frame (40L), being thinner than the left seat frame (40L);
a right down frame (50R), being connected to the right first portion (41 R) of the right seat frame (40R), being disposed rightward of the left down frame (50L), and being thinner than the right seat frame (40R);
a seat (10) supported by the left seat frame (40L) and the right seat frame (40R);
a body cover (28) being provided over at least one side of each of the left seat frame (40L) and the right seat frame (40R), and including an upper surface portion (28U) being located rearward of the head pipe (20) and frontward of the seat (10) and extending rearward and obliquely downward to a position downward relative to the seat (10);
an engine (90) disposed below the left down frame (50L) and the right down frame (50R) and supported by the left down frame (50L) and the right down frame (50R); and an air cleaner (70), **characterized in that**
the main frame (32) has a rectangular cross-sectional shape; the left down frame (50L) extends rearward and obliquely downward from the left seat frame (40L),
the right down frame (50R) extends rearward and obliquely downward from the right seat frame (40R),
the air cleaner (70) is disposed rearward relative to at least a portion of the engine (90) and disposed between the left seat frame (40L) and the right seat frame (40R) and
between the left down frame (50L) and the right down frame (50R), wherein
the left down frame (50L) extends inward in a vehicle lateral direction from the left first portion (41 L) of the left seat frame (40L);
a rear end portion (50LR) of the left down frame (50L) is positioned between the left seat frame (40L) and the right seat frame (40R) as viewed in plan of the vehicle;
the right down frame (50R) extends inward in the vehicle lateral direction from the right first portion (41 R) of the right seat frame (40R); and
a rear end portion (50RR) of the right down frame (50R) is positioned between the left seat frame (40L) and the right seat frame (40R) as viewed in plan of the vehicle.

2. A straddle-type vehicle according to claim 1, **characterized in that** the main frame (32) includes a joint portion (34) joined to the engine (90); and
the left first portion (41 L) of the left seat frame (40L) and the right first portion (41 R) of the right seat frame (40R) are connected to the main frame (32) at respective positions frontward relative to the joint portion (34).

3. A straddle-type vehicle according to claim 2, **characterized in that** the left down frame (50L) is connected to the left first portion (41 L) of the left seat frame (40L) at a position upward relative to the joint portion (34); and
the right down frame (50R) is connected to the right first portion (41 R) of the right seat frame (40R) at a position upward relative to the joint portion (34).

4. A straddle-type vehicle according to claim 2 or 3, **characterized in that** the left seat frame (40L) has a lower end (40LB) positioned upward relative to the joint portion (34), and the right seat frame (40R) has a lower end (40RB) positioned upward relative to the joint portion (34).

5. A straddle-type vehicle according to any one of claims 1 to 4, **characterized by**:
a fuel tank (64) disposed rearward of the air cleaner (70);
a left backstay (56L) joining the left down frame (50L) and the left second portion (42L) of the left seat frame (40L) to each other; and
a right backstay (56R) joining the right down frame (50R) and the right second portion (42R) of the right seat frame (40R) to each other, wherein
as viewed from a side of the vehicle, a left joint portion (57L) joining the left backstay (56L) and the left second portion (42L) of the left seat frame (40L) to each other overlaps the fuel tank (64), and a right joint portion (57R) joining the right backstay (56R) and the right second portion (42R) of the right seat frame (40R) to each other overlaps the fuel tank (64).

6. A straddle-type vehicle according to claim 5, **characterized by**:
a left reinforcing frame (58L) being disposed frontward relative to the left backstay (56L) and joining the left seat frame (40L) and the left down frame (50L) to each other; and
a right reinforcing frame (58R) being disposed frontward relative to the right backstay (56R) and rightward of the left reinforcing frame (58L), and joining the right seat frame (40R) and the right down frame (50R) to each other.

7. A straddle-type vehicle according to any one of claims 1 to 6, **characterized in that** an axial midpoint (A2) of the head pipe (20) is positioned upward relative to a vertical midpoint (A1) of a portion of the main frame (32) that is connected to the head pipe (20).

8. A straddle-type vehicle according to any one of claims 1 to 7, **characterized by**:
a first reinforcing member (21) connecting the head pipe (20) and an upper surface (32U) of the main frame (32) to each other; and
a second reinforcing member (22) connecting the head pipe (20) and a lower surface (32B) of the main frame (32) to each other.

9. A straddle-type vehicle according to any one of claims 1 to 8, **characterized in that** the engine (90) is supported directly by the main frame (32).

## Patentansprüche

1. Ein Spreiz-Sitz-Typ-Fahrzeug (1), das umfasst:
ein Kopf-Rohr (20);
einen Haupt-Rahmen (32), verbunden mit dem Kopf-Rohr (20), der sich nach hinten und schräg nach unten von dem Kopf-Rohr (20) erstreckt;
einen linken Sitz-Rahmen (40L), der mit dem Haupt-Rahmen (32) verbunden ist und einen linken ersten Abschnitt (41 L) und einen linken zweiten Abschnitt (42L) umfasst, der linke erste Abschnitt (41 L) erstreckt sich nach hinten und schräg nach unten von dem Haupt-Rahmen (32), und der linke zweite Abschnitt (42L) ist integral mit dem linken ersten Abschnitt (41 L) ausgebildet und erstreckt sich nach hinten und schräg nach unten von dem linken ersten Abschnitt (41 L);
einen rechten Sitz-Rahmen (40R), der mit dem Haupt-Rahmen (32) verbunden ist und einen rechten ersten Abschnitt (41 R) und einen rechten zweiten Abschnitt (42R) umfasst, der rechte erste Abschnitt (41 R) erstreckt sich nach hinten und schräg nach unten von dem Haupt-Rahmen (32), und der rechte zweite Abschnitt (42R) ist integral mit dem rechten ersten Abschnitt (41 R) ausgebildet und erstreckt sich nach hinten und schräg nach unten von dem rechten ersten Abschnitt (41 R), der rechte Sitz-Rahmen (40R) ist rechts von dem linken Sitz-Rahmen (40L) positioniert;
einen linken Unter-Rahmen (50L), verbunden mit dem linken ersten Abschnitt (41 L) des linken Sitz-Rahmens (40L), der dünner ist als der linke Sitz-Rahmen (40L);
einen rechten Unter-Rahmen (50R), verbunden mit dem rechten ersten Abschnitt (41 R) des rechten Sitz-Rahmens (40R), der rechts von dem linken Unter-Rahmen (50L) positioniert ist und dünner als der rechte Sitz-Rahmen (40R) ist;
einen Sitz (10), gelagert durch den linken Sitz-Rahmen (40L) und den rechten Sitz-Rahmen (40R);
eine Körper-Abdeckung (28), vorgesehen über zumindest einer Seite von jedem von dem linken Sitz-Rahmen (40L) und des rechten Sitz-Rahmen (40R), und die einen oberen Flächenabschnitt (28U), der hinter dem Kopf-Rohr (20) und vor dem Sitz (10) angeordnet ist und sich nach hinten schräg nach unten zu einer Position unterhalb relativ zu dem Sitz (10) erstreckend, beinhaltet;
einen Motor (90), positioniert unterhalb des linken Unter-Rahmens (50L) und des rechten Unter-Rahmens (50R) und gelagert durch den linken Unter-Rahmen (50L) und den rechten Unter-Rahmen (50R); und einen Luftfilter (70), **dadurch gekennzeichnet, dass**
der Haupt-Rahmen (32) eine rechtwinklige Querschnittsform hat;
der linke Unter-Rahmen (50L) sich nach hinten und schräg nach unten von dem linken Sitz-Rahmen (40L) erstreckt,
der rechte Unter-Rahmen (50R) sich nach hinten und schräg nach unten von dem rechten Sitz-Rahmen (40R) erstreckt,
der Luftfilter (70) ist relativ hinter zumindest einem Teil von dem Motor (90) positioniert und zwischen dem linken Sitz-Rahmen (40L) und dem rechten Sitz-Rahmen (40R) und zwischen dem linken Unter-Rahmen (50L) und dem rechten Unter-Rahmen (50R) positioniert, wobei
der linke Unter-Rahmen (50L) sich nach innen in einer Fahrzeug-Quer-Richtung von dem linken ersten Abschnitt (41 L) des linken Sitz-Rahmens (40L) erstreckt;
ein hinterer Endabschnitt (50LR) des linken Unter-Rahmens (50L) ist zwischen dem linken Sitz-Rahmen (40L) und dem rechten Sitz-Rahmen (40R), wenn in einer Draufsicht des Fahrzeugs betrachtet, positioniert;
der rechte Unter-Rahmen (50R) sich nach innen in der Fahrzeug-Quer-Richtung von dem rechten ersten Abschnitt (41 R) des rechten Sitz-Rahmens (40R) erstreckt; und ein hinterer Endabschnitt (50RR) des rechten Unter-Rahmens (50R) ist zwischen dem linken Sitz-Rahmen (40L) und dem rechten Sitz-Rahmen (40R), wenn in einer Draufsicht des Fahrzeugs betrachtet, positioniert.

2. Ein Spreiz-Sitz-Typ-Fahrzeug gemäß Anspruch 1, **dadurch gekennzeichnet, dass** der Haupt-Rahmen (32) einen Verbindungsabschnitt (34) beinhaltet, der mit dem Motor (90) verbunden ist; und
der linke erste Abschnitt (41 L) des linken Sitz-Rahmens (40L) und der rechte erste Abschnitt (41 R) des rechten Sitz-Rahmens (40R) sind mit dem Haupt-Rahmen (32) an jeweiligen Positionen relativ vor dem Verbindungsabschnitt (34) verbunden.

3. Ein Spreiz-Sitz-Typ-Fahrzeug gemäß Anspruch 2, **dadurch gekennzeichnet, dass** der linke Unter-Rahmen (50L) mit dem linken ersten Abschnitt (41 L) des linken Sitz-Rahmens (40L) an einer Position relativ oberhalb zu dem Verbindungsabschnitt (34) verbunden ist; und
der rechte Unter-Rahmen (50R) mit dem rechten ersten Abschnitt (41 R) des rechten Sitz-Rahmens (40R) an einer Position relativ oberhalb zu dem Verbindungsabschnitt (34) verbunden ist.

4. Ein Spreiz-Sitz-Typ-Fahrzeug gemäß Anspruch 2 oder 3, **dadurch gekennzeichnet, dass** der linke Sitz-Rahmen (40L) ein unteres Ende (40LB) hat, positioniert relativ oberhalb zu dem Verbindungsabschnitt (34), und der rechte Sitz-Rahmen (40R) ein unteres Ende (40RB) hat, positioniert relativ oberhalb zu dem Verbindungsabschnitt (34).

5. Ein Spreiz-Sitz-Typ-Fahrzeug gemäß irgendeinem der Ansprüche 1 bis 4, **gekennzeichnet durch**:
einen Kraftstofftank (64), positioniert hinter dem Luftfilter (70);
eine linke Rück-Strebe (56L), welche den linken Unter-Rahmen (50L) und den linken zweiten Abschnitt (42L) des linken Sitz-Rahmens (40L) miteinander verbindet; und
eine rechte Rück-Strebe (56R), welche den rechten Unter-Rahmen (50R) und den rechten zweiten Abschnitt (42R) des rechten Sitz-Rahmens (40R) miteinander verbindet, wobei
wenn betrachtet von einer Seite des Fahrzeugs, ein linker Verbindungsabschnitt (57L), welcher die linke Rück-Strebe (56L) und den linken zweiten Abschnitt (42L) des linken Sitz-Rahmens (40L) miteinander verbindet, den Kraftstofftank (64) überlappt, und ein rechter Verbindungsabschnitt (57R), welcher die rechte Rück-Strebe (56R) und den rechten zweiten Abschnitt (42R) des rechten Sitz-Rahmens (40R) miteinander verbindet, den Kraftstofftank (64) überlappt.

6. Ein Spreiz-Sitz-Typ-Fahrzeug gemäß Anspruch 5, **gekennzeichnet durch**:
einen linken Verstärkungs-Rahmen (58L), der relativ vor der linken Rück-Strebe (56L) positioniert ist und den linken Sitz-Rahmen (40L) und den linken Unter-Rahmen (50L) miteinander verbindet; und
einen rechten Verstärkungs-Rahmen (58R), der relativ vor der rechten Rück-Strebe (56R) und rechts von dem linken Verstärkungs-Rahmen (58L) positioniert ist, und den rechten Sitz-Rahmen (40R) und den rechten Unter-Rahmen (50R) miteinander verbindet.

7. Ein Spreiz-Sitz-Typ-Fahrzeug gemäß irgendeinem der Ansprüche 1 bis 6, **dadurch gekennzeichnet, dass** ein axialer Mittelpunkt (A2) des Kopf-Rohrs (20) relativ oberhalb zu einem vertikalen Mittelpunkt (A1) eines Abschnitts des Haupt-Rahmens (32) positioniert ist, der mit dem Kopf-Rohr (20) verbunden ist.

8. Ein Spreiz-Sitz-Typ-Fahrzeug gemäß irgendeinem der Ansprüche 1 bis 7, **gekennzeichnet durch**:
ein erstes Verstärkungs-Element (21), welches das Kopf-Rohr (20) und eine obere Fläche (32U) des Haupt-Rahmens (32) miteinander verbindet; und
ein zweites Verstärkungs-Element (22), welches das Kopf-Rohr (20) und eine untere Fläche (32B) des Haupt-Rahmens (32) miteinander verbindet.

9. Ein Spreiz-Sitz-Typ-Fahrzeug gemäß irgendeinem der Ansprüche 1 bis 8, **dadurch gekennzeichnet, dass** der Motor (90) direkt durch den Haupt-Rahmen (32) gelagert ist.

## Revendications

1. Véhicule à selle (1) comprenant :
une tubulure de tête (20) ;
un cadre principal (32) connecté à la tubulure de tête (20), s'étendant vers l'arrière et obliquement vers le bas depuis la tubulure de tête (20) ;
un châssis de siège gauche (40L) connecté au cadre principal (32) et comprenant une première partie gauche (41L) et une seconde partie gauche (42L), la première partie gauche (41L) s'étendant vers l'arrière et obliquement vers le bas depuis le cadre principal (32), et la seconde partie gauche (42L) formée intégralement avec la première partie gauche (41L) et s'étendant vers l'arrière et obliquement vers le haut depuis la première partie gauche (41L) ;
un châssis de siège droit (40R) connecté au cadre principal (32) et comprenant une première partie droite (41R) et une seconde partie droite (42R), la première partie droite (41R) s'étendant vers l'arrière et obliquement vers le bas depuis le cadre principal (32), et la seconde partie droite (42R) formée intégralement avec la première partie droite (41R) et s'étendant vers l'arrière et obliquement vers le haut depuis la première partie droite (41R), le châssis de siège droit (40R) étant disposé vers la droite du châssis de siège gauche (40L) ;
un châssis inférieur gauche (50L), étant connecté à la première partie gauche (41L) du châssis de siège gauche (40L), étant plus fin que le châssis de siège gauche (40L) ;
un châssis inférieur droit (50R), étant connecté à la première partie droite (41R) du châssis de siège droit (40R), étant disposé vers l'arrière du châssis inférieur gauche (50L), et étant plus fin que le châssis de siège droit (40R) ;
un siège (10) supporté par le châssis de siège gauche (40L) et le châssis de siège droit (40R) ;
un capot de carrosserie (28) étant disposé sur au moins un côté de chacun du châssis de siège gauche (40L) et du châssis de siège droit (40R), et incluant une partie de surface supérieure (28U) localisée vers l'arrière de la tubulure de tête (20) et vers l'avant du siège (10) et s'étendant vers l'arrière et obliquement vers le bas jusqu'à une position vers le bas par rapport au siège (10) ;
un moteur (90) disposé sous le châssis inférieur gauche (50L) et le châssis inférieur droit (50R) et soutenu par le châssis inférieur gauche (50L) et le châssis inférieur droit (50R) ; et un épurateur d'air (70), **caractérisé en ce que**
le cadre principal (32) présente une forme transversale rectangulaire ;
le châssis inférieur gauche (50L) s'étend vers l'arrière et obliquement vers le bas depuis le châssis de siège gauche (40L),
le châssis inférieur droit (50R) s'étend vers l'arrière et obliquement vers le bas depuis le châssis de siège droit (40R),
l'épurateur d'air (70) est disposé vers l'arrière par rapport à au moins une partie du moteur (90) et disposé entre le châssis de siège gauche (40L) et le châssis de siège droit (40R) et entre le châssis inférieur gauche (50L) et le châssis inférieur droit (50R), dans lequel le châssis inférieur gauche (50L) s'étend vers l'intérieur dans un sens latéral du véhicule depuis la première partie gauche (41L) du premier châssis de siège gauche (40L) ;
une partie d'extrémité arrière (50LR) du châssis inférieur gauche (50L) est positionnée entre le châssis de siège gauche (40L) et le châssis de siège droit (40R) tel que visualisé dans le plan du véhicule ;
le châssis inférieur droit (50R) s'étend vers l'intérieur dans le sens latéral du véhicule depuis la première partie droite (41R) du châssis de siège droit (40R) ; et
une partie d'extrémité arrière (50RR) du cadre inférieur droit (50R) est positionnée entre le châssis de siège gauche (40L) et le châssis de siège droit (40R) tel que visualisé dans le plan du véhicule.

2. Véhicule à selle selon la revendication 1, **caractérisé en ce que** le cadre principal (32) inclut une partie d'articulation (34) jointe au moteur (90) ; et
la première partie gauche (41L) du châssis de siège gauche (40L) et la première partie droite (41R) du châssis de siège droit (40R) sont connectées au cadre principal (32) aux positions respectives vers l'avant par rapport à la partie d'articulation (34).

3. Véhicule à selle selon la revendication 2, **caractérisé en ce que** le châssis inférieur gauche (50L) est connecté à la première partie gauche (41L) du châssis de siège gauche (40L) à une position supérieure par rapport à la partie d'articulation (34) ; et
le châssis inférieur droit (50R) est connecté à la première partie droite (41R) du châssis de siège droit (40R) à une position supérieure par rapport à la partie d'articulation (34).

4. Véhicule à selle selon la revendication 2 ou 3, **caractérisé en ce que** le châssis de siège gauche (40L) a une extrémité inférieure (40LB) positionnée vers le haut par rapport à la partie d'articulation (34), et le châssis de siège droit (40R) a une extrémité inférieure (40RB) positionnée vers le haut par rapport à la partie d'articulation (34).

5. Véhicule à selle selon l'une quelconque des revendications 1 à 4, **caractérisé par** :
un réservoir de carburant (64) disposé à l'arrière de l'épurateur d'air (70) ;
un support arrière gauche (56L) joignant le châssis inférieur gauche (50L) et la seconde partie gauche (42L) du châssis de siège gauche (40L) l'un à l'autre ; et
un support arrière droit (56R) joignant le châssis inférieur droit (50R) et la seconde partie droite (42R) du châssis de siège droit (40R) l'un à l'autre, dans lequel
tel que visualisé depuis un côté du véhicule, une partie d'articulation gauche (57L) joignant le support arrière gauche (56L) et la seconde partie gauche (42L) du châssis de siège gauche (40L) l'un à l'autre passe par-dessus le réservoir de carburant (64), et une partie d'articulation droite (57R) joignant le support arrière droit (56R) et la seconde partie droite (42R) du châssis de siège droit (40R) l'un à l'autre chevauche le réservoir de carburant (64).

6. Véhicule à selle selon la revendication 5, **caractérisé par** :
une armature de renfort gauche (58L) disposée vers l'avant par rapport au support arrière gauche (56L) et joignant le châssis de siège gauche (40L) et le châssis inférieur gauche (50L) l'un à l'autre ; et une armature de renfort droite (58R) disposée vers l'avant par rapport au support arrière droit (56R) et vers la droite du l'armature de renfort gauche (58L), et joignant le châssis de siège droit (40R) et le châssis inférieur droit (50R) l'un à l'autre.

7. Véhicule à selle selon l'une quelconque des revendications 1 à 6, **caractérisé en ce qu'**un point axial médian (A2) de la tubulure de tête (20) est positionné vers le haut par rapport à un point médian vertical (A1) d'une partie du cadre principal (32) qui est connecté à la tubulure de tête (20).

8. Véhicule à selle selon l'une quelconque des revendications 1 à 7, **caractérisé par** :
un premier élément de renfort (21) connectant la tubulure de tête (20) et une surface supérieure (32U) du cadre principal (32) l'un à l'autre ; et
un second élément de renfort (22) connectant la tubulure de tête (20) et une surface inférieure (32B) du cadre principal (32) l'un à l'autre.

9. Véhicule à selle selon l'une quelconque des revendications 1 à 8, **caractérisé en ce que** le moteur (90) est soutenu directement par le cadre principal (32).
